(19) Europäisches Patentamt European Patent Office Office européen des brevets

(11) **EP 4 726 565 A1**

(12) **EUROPEAN PATENT APPLICATION**

(43) Date of publication:
**15.04.2026 Bulletin 2026/16**

(21) Application number: **24306656.0**

(22) Date of filing: **09.10.2024**

(51) International Patent Classification (IPC):
***G06F 16/11*** (2019.01)

(52) Cooperative Patent Classification (CPC):
**G06F 16/119; G06F 16/122**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **BULL SAS**
**78340 Les Clayes-Sous-Bois (FR)**
• **Université de Versailles Saint-Quentin-en-Yvelines**
**78000 Versailles (FR)**

(72) Inventors:
• **KHELILI, Adrian**
**38000 Grenoble (FR)**
• **COUVEE, Philippe**
**38190 Villard Bonnot (FR)**
• **ROBERT, Sophie**
**57000 Metz (FR)**
• **ZERTAL, Soraya**
**92330 Sceaux (FR)**

(74) Representative: **Cabinet Camus Lebkiri**
**25 rue de Maubeuge**
**75009 Paris (FR)**

(54) **METHOD FOR IMPROVING THE FILE STORING MANAGEMENT IN A HIGH-PERFORMANCE COMPUTER**

(57) According to an aspect of the invention, it is provided a method (100) for placing a file on a storage support, the file being used by an application running on the high-performance computer, the method comprising:
- Obtaining (110) a history related to previous accesses to the file by the application, an access being a reading or a writing operation;
- Determining (120) a file category of the file, by comparing the obtained history with reference histories, each reference history corresponding to a reference file, each reference file corresponding to a file category, each file category being associated with a storage support;
- Emitting (130) a command for placing the file on the storage support to which the determined file category is associated.

100

110 Obtaining a history of reading and writing actions carried out by an application on a file

120 Determining a file category of the file based on the obtained history

130 Emitting a command for placing the file on a storage support corresponding to said file category

**Figure 1**

EP 4 726 565 A1

**Description**

**TECHNICAL FIELD**

The technical field of the invention is the one of high-performance computing.

The present invention concerns a method for judiciously placing a file on a storage support among a plurality of storage supports in a high-performance computer depending on a file category of said file, and a device for implementing such method.

**BACKGROUND OF THE INVENTION**

In the context of high-performance computing, several applications are defined as I/O-intensive (standing for "Input/Ouput- intensive") as they induce a significant stress for the backend storage of files generated by such an application during its execution. In particular, this stress is due to intensive accesses to these files, either for reading and/or writing operations.

A known solution to address this intensive use of storage supports resides in implementing a hierarchical storage management (also called tiered storage). This management moves files from a storage tier to another, to make a better use of the storage technology (including RAM, SSD-NVMe, SSDs, and HDDs, etc.). By doing so, it is possible to store files on a high-tier storage when they are in use and to store them on a low-tier storage when they are not.

A first known approach to efficiently move files to the right storage tier is based on a block-based analysis of the file to determine, based on this analysis, which storage tier is best suited for storing this file. Examples of this approach include LRU (standing for "Least Recently Used"), LFU (for "Least Frequently Used"), FIFO ("First In, First Out"), LRFU ("Least Recently/Frequently Used"), etc. More sophisticated examples rely on Markov Chains predictions with the drawback of making the strong assumption that I/O requests are memoryless (i.e., the prediction only depend on the actual state of the modelled system and not the previous ones).

A second known approach to determine the best suited storage tier performs a monitoring of the running application to know its way of operating, such as by monitoring runtime and/or data read and/or written by the application (e.g., see Julian Kunkel et al., Predicting performance of non-contiguous I/O with machine learning, in Proceedings of the 30th International Conference in High Performance Computing, vol. 30, pages 257-273, 2015, or Ryan McKenna et al., Machine learning predictions of runtime and io traffic on high-end clusters, in Proceedings of IEEE International Conference on Cluster Computing, pages 255-258, 2016). This approach is then based on when the application accesses a file.

These aforementioned approaches are however agnostic of the file itself, as the first one only focuses on blocks of said file, while the second one only analyses said file through the operating of the application. The utility and the actual use of the considered file are then not taken into account when selecting the best storage tier to place this file on. Therefore, the first approach is limited to cases where the accesses to a file have few to no variations across the blocks of said file, while the second approach is not able to discriminate the rate of use of different files by the application to efficiently distribute them on different storage tiers. Moreover, these approaches do not take into account the reusability of a file during a same implementation of the application or between different implementations of the application. Additionally, traditional methods fail to adapt to dynamic changes in file usage, resulting in performance loss due to inefficient resource allocation. Therefore, there is a need to enhance the file placement on the best suited storage tier within a high-performance computing system.

**SUMMARY OF THE INVENTION**

An object of the invention is to provide a method for placing a file on a storage support of a high-performance computer based on a file category determined for said file. depending on a history that indicates the reading and writing accesses of this file by an application.

To this end, according to a first aspect of the invention, it is provided a computer implemented method for placing a file on a storage support among a plurality of storage supports in a high-performance computer, each storage support of the plurality of storage supports having different storing capacities, the file being used by an application running on the high-performance computer, the method comprising :

- Obtaining a history related to a plurality of previous accesses to the file by the application, an access being a reading or a writing operation;
- Determining a file category of the file among a plurality of file categories, by comparing the obtained history with a plurality of reference histories, each reference history corresponding to a reference file from a plurality of reference files, each said reference file corresponding to a file category from the plurality of file categories, each file category of the plurality of file categories being associated with one of the storage supports of the plurality of storage supports;
- Emitting a command for placing the file on the storage support of the plurality of storage supports to which the determined file category of said file is associated.

By "file" is meant a file generated by the execution of the application or by a third party, and that contains data required for the application to operate and/or data generated by said application and stored in said file. The file is therefore accessible by the application during its execution via reading and/or writing operations.

By "storage support" is meant any kind of component of any kind of technology comprised in the High-Performance Computer (HPC) that is able to store the file on it. The storage support is accessible by the application during its execution. The storage support is, for example, a Random-Access Memory (RAM), a Solid-State Drive- Non-Volatile Memory Express (SSD-NVMe), a Solid-State Drive (SSD), a Hard Disk Drive (HDD), or else.

By "history" is meant a collection of data accumulated over time that comprises a list of previous actions and/or events, notably the previous reading and writing operations (also called access operations or accesses) carried out by the application to the file. In other words, the history is a list indicating files already accessed by the application along with the reading/writing access patterns, by the application, associated with each of said files. These access patterns can be observed across one or multiple applications. As an exemplary embodiment, the history comprises the volume of data accessed (i.e., read or written) by the application through each access operation.

By "file category" is meant a class among a file classification that indicates what kind of file the file is, in a HPC application context. In particular, the file category indicates the purpose of the file with respect to the application, notably the execution of the application. This category reflects the access activity or access rate (i.e., reading and writing operations) of the application regarding this file. For example, a tag or a label is assigned to the file and indicates the file category of this file. The tag or label can be of any type and/or format as long as it indicates the file category of the file.

By "placing" is meant the displacement of the file from the storage support it is on to another storage support, in this case on the storage support corresponding to the file category determined for this file. This displacement then corresponds to the data movement strategy of the file across the storage hierarchy. In the presented approach, the placement of a given file is determined by the category to which this file belongs.

Thanks to the invention, it is possible to define the best suited storage support to place the file on in order to increase the hit rate (i.e., the ratio of successful data accesses to the total number of access attempts) of the execution of the application. Indeed, by determining the file category of the file, i.e., by determining the utility (or purpose) of the file for this application, it is possible to move the file on a storage support that is best suited for the usage of this file. In other words, in a tiered storage, the invention allows to find the storage tier that best corresponds, in terms of storing capacity (notably in terms of read and/or write speed), to the purpose of the file with respect to the application.

For example, the proposed method makes it possible to place an intensively accessed file, determined through the reading and/or writing operations carried out by the application, on a higher tiered storage support (i.e., storage supports with higher read and/or write speed), such as a RAM, a SSD-NVMe or a SSD, while a file with few accesses by the application is placed on a lower tiered storage supports (i.e., storage supports with lower read and/or write speed), such as a HDD.

This approach represents a paradigm shift as the file is here considered as a whole to determine its file category, while the techniques known from the art only focus on some of its blocks or on when the application accesses the file.

It is further noted that the file category of the file cannot be determined solely from a part of its blocks but from the whole file. Consequently, the file category cannot be obtained from the approaches of the state of the art. As a result, the methods from the art overlook the potential benefits of analysing inter-file similarities, which can provide valuable insights into usage patterns and access behaviours that span multiple files. Ignoring these inter-file interactions leads to missed opportunities for refining storage strategies. In other words, the lack of consideration for the broader context in which files are used ultimately limits the effectiveness of these approaches in accurately managing storage systems.

Technically speaking, the proposed approach searches for similarities between the history of the considered file and reference histories, via the comparison, to determine to which file category the file belongs to. This file category is determined based on the analysis of the access pattern, contained in the history, of the application to the file. A reference history is then comparable as a known scenario of reading and/or writing operations on this file. In this context, the history is comparable to a time series of the access operations carried out by the application on this file. The history can then comprise a time series for the reading operations carried out by the application on this file, and a time series for the writing operations carried out by the application on this file.

It is noted that the determination of the file category requires to both know the reading and writing activities. Without both, the file category cannot be determined. This means that, when there is no reading or writing activity, this information is not disregarded but accounted for and set to a null/zero value and is contained in the history.

This approach can advantageously be applied to any kind of application and is not bound to applications it has already been applied to. In other words, the reference files and the associated reference histories can originate from any application, even from a different application than the application the method is currently applied for.

Advantageously, this paradigm shift allows for a robust file placement with respect to the variations in the access pattern of the file history throughout several implementations and/or configurations of the application. It is indeed known that the reading and writing operations carried out by an application are, for certain files, dependent on the initialisation of the application (for example, dependent on the initial data required to start the computations - be it due to the variable size and/or complexity of the data). Therefore, the access pattern to these files by the application is not exactly the same from one implementation and/or configuration to another. These pattern variations that actually exist for these files cannot be grasped by the techniques from the art. The invention therefore settles ground for an enhanced way of placing files on a storage support depending on the access history by an HPC application. Extensive testing of this method for several applications and for different implementation scenarios of this application have shown that even when the method is only able to classify well only a part of the files used by the application, the hit rate for this application is significantly increased, compared to known techniques from the art. This new approach then provides a highly efficient method for moving files used by an application in order to increase its hit rate.

Apart from the characteristics mentioned in the previous paragraphs, the method according to a first aspect of the invention may have one or several complementary characteristics among the following characteristics considered individually or in any technically possible combinations.

According to an embodiment, the history comprises between 10 and 500 of the latest accesses to the file by the application.

According to an embodiment, the plurality of file categories comprises one or more of an input file category, a checkpoint file category, a log file category, a work file category and/or an output file category, wherein:

- The input file category refers to files for which a history of previous accesses only has a reading activity at the beginning of the execution of the application;
- The checkpoint file category refers to files for which a history of previous accesses has a regular writing activity;
- The log file category refers to files for which a history of previous accesses has an irregular writing activity;
- The output file category refers to files for which a history of previous accesses only has a writing activity at the end of the execution application;
- The work file category refers to files that do not belong to one of the other categories of the plurality of categories.

According to an embodiment, the file category of the file is determined by:

- Determining (121a) a distance between the obtained history and each reference history of the plurality of reference histories;
- Assigning (122a) to the file, the file category of the reference file that corresponds to the reference history for which the determined distance is the smallest.

According to an embodiment, the distance is derived using a dynamic time warping technique applied to both previous read and write accesses in the obtained history.

According to an embodiment, the distance is computed between the obtained history and a barycentre history from a plurality of barycentre histories, each barycentre history being a barycentre of the reference histories corresponding to reference files associated with a same file category from the plurality of file categories.

According to an embodiment, the file category of the file is determined by:

- Determining one or more features from the obtained history;
- Determining the file category of the file by a machine learning classification algorithm configured to provide the file category based on the determined features compared against the same one or more features determined for each reference history of the plurality of reference histories.

According to an embodiment, the one or more features comprise one or more of:

- An energy ratio by segments and/or a time reversal asymmetry statistic for the reading operations contained in the obtained history; and/or
- A sum of values, Fourier Transform coefficients, a time reversal asymmetry statistic, a position of the last maximum value, an energy ratio by segments, changes between quantiles, continuous wavelet transform coefficients and/or an indicator of duplicate maximum values, for the writing operations contained in the obtained history.

According to an embodiment, the machine learning classification algorithm is trained on a database comprising the plurality of reference histories, each reference history being associated with a label that indicates the file category of the reference file corresponding to said reference history.

According to an embodiment, the history obtention and the file category determination are carried out again after a predefined duration.

According to an embodiment, the command emission is carried out after the carrying out of the history obtention and the file category determination after the predefined duration, when the file category determined after the predefined duration is different from the file category determined before the predefined duration.

According to a second aspect of the invention, it is provided a module for placing a file on a storage support among a plurality of storage supports in a high-performance computer, said module being configured to carry out the steps of the method according to the first aspect.

According to a third aspect of the invention, it is provided a high-performance computer comprising a plurality of storage supports and a module for placing a file on a storage support among the plurality of storage supports in the high-performance computer, according to the second aspect.

According to fourth aspect of the invention, it is provided a computer program product comprising instructions which, when the program is executed by a computer, causes the computer to carry out the method according to the first aspect.

According to fifth aspect of the invention, it is provided a computer-readable medium comprising instructions which, when executed by a computer, cause the computer to carry out the method according to first aspect.

The invention and its various applications will be better understood by reading the following description and examining the accompanying figures.

**BRIEF DESCRIPTION OF THE FIGURES**

The figures are presented for information purposes only and in no way limit the invention.

- Figure 1 is a flow chart of a method according to an aspect of the invention.
- Figure 2 is a flow chart detailing a step of the method, according to some embodiments.
- Figure 3 is a flow chart detailing a step of the method, according to other embodiments.
- Figure 4 is a flow chart of a variant of the method from figure 1.
- Figure 5 schematically represents a module configured to implement the method of the invention.
- Figure 6 schematically represents a high-performance computer comprising the module from figure 5.

**DETAILED DESCRIPTION OF THE PREFERRED EMBODIMENT**

Some embodiments of devices and methods in accordance with embodiments of the present invention are now described, by way of example only, and with reference to the accompanying drawings. The description is to be regarded as illustrative in nature and not as restrictive.

In the context of high-performance computing, no known technique is able to fully grasp the purpose of a file that is used by an application running on a High-Performance Computer (HPC). The present invention therefore proposes an approach that is able to classify a considered file in a file category among several other file categories, related to the purpose of said file. This purpose is determined from a history that comprises previous read and write accesses to this file by the application. Advantageously, depending on the file category, i.e., depending on the access activity of said file by said application, the file is then placed on a storage support which is best suited to store this file, especially that is best suited to increase the hit rate of the application that needs this file and consequently to decrease the application execution time. As a consequence, the hit rate of all the applications running on the HPC is also increased.

The idea behind the approach is to classify the files based on identifiable and predictable access patterns (i.e., Input/Output actions) over several executions of a same application and also over executions of different applications, on the same file or on files of the same category.

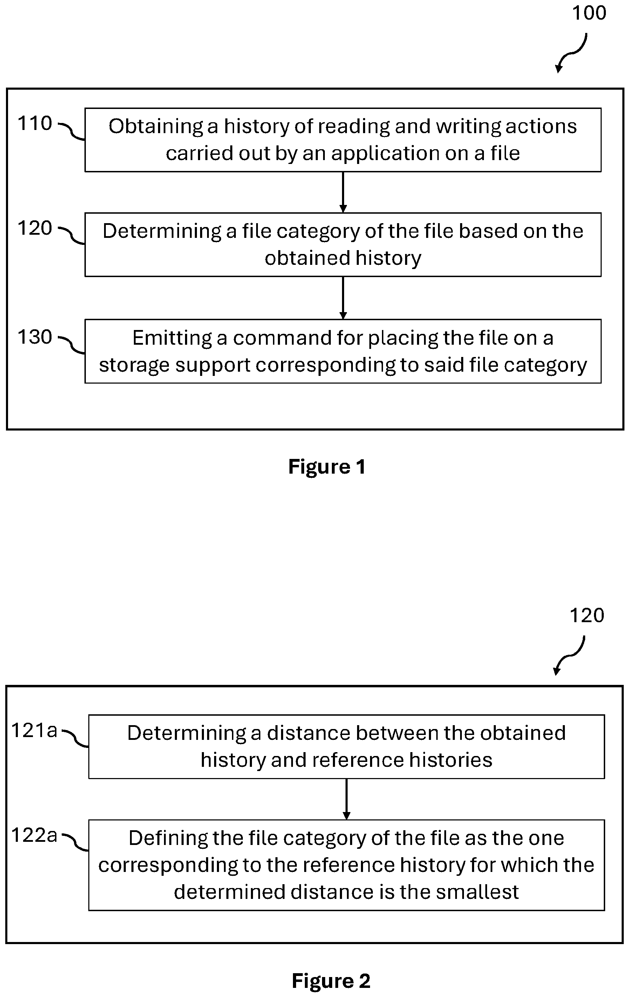

The invention thus relates to a method 100, in connection with figure 1, for placing a file on a storage support in a high-performance computer. The storage support is comprised in a plurality of storage supports that is comprised in the HPC.

The file is being used by an application that is running on the HPC, i.e., an application that is under execution on resources of the HPC that are allocated to its execution (such as processors, memories, etc.). The file is either generated by the application or by any another source and is stored on a storage support, called the initial storage support, and that can be different from the storage support on which the file is to be placed, also called the target storage support. The initial storage support can be comprised in the plurality of storage supports or can be different from said plurality of storage supports. The initial storage is, for example, the default storage support of the HPC that is allocated to the execution of the application, such as the RAM used by the processor to run the application or a SSD or a HDD on which the data generated by the application are stored by default. The aim of the method 100 is then to determine on which other storage support should the file be placed in order to increase the hit rate of the application. Among the plurality of storage supports, each storage support has different storing capacities, especially in terms of reading and/or writing speeds. In particular, a storage support can have higher reading and/or writing latencies and/or can have lower reading and/or writing latencies than other storage supports of the plurality of storage supports. As such, the plurality of storage support forms a tiered storage. For example, each storage support can be RAM, SSD-NVMe, a SSD, a HDD, or any other memory hardware type. The storage support on which the file is to be placed is then chosen among the plurality of storage supports via the implementation of the steps of the method 100.

To this aim, the method 100 comprises a step 110 of obtaining a history of previous reading and writing operations of the application to the considered file. The reading and writing operations are also called the accesses of the application to the file.

The history comprises the plurality of previous accesses to the file by the application, each access being a reading or a writing operation.

The history can also include an indication of the date and time at which each access contained in the history has been carried out. For example, the history can also contain a time stamp for each of the reading and writing operations contained in the history. The date and time indicated can be set in any format, and can contain the hour, the minute, the second and/or the millisecond of the moment at which the access was made. It can also contain the day, the month and/or the year of this access.

The history can be generated using any known technique, for example it can be generated by a managing module that monitors the accesses to the file and that is configured to detect any reading or writing operation on the file, and to build and store in a memory, that can be a volatile or a non-volatile one, the history from these detections. The history can then be obtained from this memory through the implementation of the method 100. The history can be obtained, for example, by the KNOWAC method (J. He and X.-H. Sun, KNOWAC: I/O Prefetch via Accumulated Knowledge, in Proceedings of the 2012 IEEE International Conference on Cluster Computing, 2012) or the DickSeen method (X. Ding et al., DiskSeen: Exploiting Disk Layout and Access History to Enhance I/O Prefetch, in Proceedings of the USENIX Annual Technical Conference, 2007).

The history can be of limited length, which means that it can contain only a part of the previous reading and writing operations. In other words, the plurality of accesses is limited in terms of length or in terms of time. For example, the plurality of accesses comprises at most the 500 last reading and writing operations, or even at most the 400 or 300 or 200 latest reading and writing operations. In an exemplary embodiment, the plurality of accesses comprises the 100 latest reading and writing operations and the history is divided into at least 5 bins (for example between 10 to 20 bins, such as 10 or 15 or 20 bins).

Complementarily or alternatively, the plurality of accesses comprises at least the 10 latest reading and writing operations, or even at least the 20 or 30 or 40 or 50 latest reading and writing operations.

The method 100 also comprises a step 120 of determining the file category of the file. As stated earlier, the file category depicts the utility, or purpose, of the file with respect to the application.

The file category of the file is chosen among the plurality of file categories. As earlier stated, each file category indicates the purpose of the file with respect to the application.

Each file category is defined prior to the implementation of the method 100, i.e., is predefined. Each file category can be predefined via any known technique, be it automatically or manually. For example, each file category is manually predefined by an operator that manages the HPC, based on his knowledge and experience in high-performance computing and/or on the application. Alternatively, the file categories can be predefined by an algorithm that automatically defines them, for example via a clustering method and/or via a machine learning algorithm.

The file categories can be any kind of categories that are relevant to classify the files used and/or generated by the application. As an example, most applications use input files that contain data required to initiate the computations by the application, log files that contain information regarding the well-functioning of the execution of the application, work files that contain data computed over the course of the execution of the application and that need to be stored at least temporarily. Applications can also use checkpoint files that contain the data required to restart the application from the checkpoint in case of failure, and/or output files that contain the result obtained at the end of the computations of the application. The file categories can then be predefined based on these different file types and purposes.

More generally, the file categories are predefined based on already existing files, called reference files. The file categories are then established depending on the known purpose of these reference files.

For each of these reference files, a history is determined, termed reference history. This means that for each file category, there is at least one reference history that has been built, prior to the implementation of the method 100. Each reference history contains the past access operations of an application to the corresponding reference file. These reference histories can be built in a similar manner as the history of the file obtained at step 110. As a consequence, there exists, for each file category, one or more reference histories, that correspond to the reference file corresponding to said file category. In other words, this means that there is at least one reference history for each file category to which the obtained history of the file can be compared.

Thus, the file category of the file is obtained by carrying out a comparison between the obtained history of the file and a plurality of reference histories. As mentioned before, these reference histories come from a plurality of reference files that are already associated with one of the file categories from the plurality of file categories.

In other words, each reference history corresponds to a reference file from the plurality of reference files and each said reference file corresponds to a file category from the plurality of file categories.

The reference histories can be of the same length or of different lengths for several or every reference history. Moreover, the reference histories can be, for a part or all of the reference histories, of the same length as the obtained history, which means that they all comprise the same number of previous access operations, or they can be of different length (be it smaller or greater).

In order to know on which of the storage supports the file must be placed, each file category is predefined to correspond to one of the storage supports. This means that, prior to the implementation of the method 100, each file category established from the reference files is defined to be associated with one of the storage supports. In other words, the association of a file category with a storage support depends on the known purpose of the considered reference file.

Otherwise termed, each file category of the plurality of file categories is associated with one of the storage supports of the plurality of storage supports.

The comparison of the obtained history with the reference histories can be achieved via any known technique from the art, for example by computing a distance, by using a clustering method, by using a machine learning algorithm, etc. It can be observed that the files categories can be considered as akin to a ranking of the priority of the files depending on their purpose and use by the application, that relates to a ranking of the storing performances of the storage supports (notably in terms of reading and/or writing speeds).

The method 100 also comprises a step 130 of emitting a command to place the file on the storage support designated by the file category. In other words, this step 130 produces the emission of a command for placing the file on the storage support of the plurality of storage supports to which the determined file category of said file is associated.

The command can be generated and emitted via any known technique. The command is, for example, emitted to a burst buffer, which is a type of module known to manage the tiered storage and to move files from a storage support to another. A burst buffer example is Flash Accelerator™.

Thanks to this invention, is it possible to move a file with few accesses contained in its history to a low tiered storage support, such as a HDD, while it is possible to move a file with many accesses contained in its history to a high tiered storage support, such as a RAM.

It is noted that the file is moved by the burst buffer only if said file is not already on the storage support designated by the method 100. This decision to move or not this file is then made by the burst buffer itself, independent of the method 100.

In some embodiments, the plurality of file categories can comprise an input file category, a checkpoint file category, a log file category, a work file category and/or an output file category.

As mentioned before, an input file contains data that the application requires to initiate its computations. For example, an input file may contain initial conditions for a simulation, experimental data to analyse, datasets of different types (image, text, video, etc.) for training a machine learning model. An input file is then characterized, in terms of reading and writing accesses, by a reading activity that only occurs at the beginning of the execution of the application and by no writing activity. This means that the input file category refers to files for which a history of previous accesses only has a reading activity at the beginning of the execution of the application.

A checkpoint file, generated at a checkpoint of the application, contains the data required to restart the application from this checkpoint, in case of failure. A checkpoint file is then used to save the state of a process at a given moment, for example, to periodically generate a backup of the state of an ongoing simulation, or to save the weights and parameters of a trained machine learning model. A checkpoint file is then characterized by several regular write operations over the course of the execution of the application. This means that the checkpoint file category refers to files for which a history of previous accesses has a regular writing activity.

A log file contains information regarding the well-functioning of the execution of the application. Log files are then used by the application during its execution to write data into said log files in order to keep track of the well-progress of the application for debugging. For example, a log file can contain the record of significant events, encountered errors, warnings, performance data, or other data that provides a detailed trace of the behaviour of the application. A log file is then characterized by several write operations over the course of the execution of the application, but with no regularity. This means that the log file category refers to files for which a history of previous accesses has an irregular writing activity.

An output file contains the final results of the application. For example, such file comprises simulation results, statistical analyses, visualizations, final weights of a trained machine learning model, visualizations, etc. This file is produced by the application upon execution completion and is consumed by end users or other applications. An output file is then characterized, in terms of reading and writing accesses, by a writing activity that only occurs at the end of the execution of the application and by no reading activity. This means that the output file category refers to files for which a history of previous accesses only has a writing activity at the end of the execution application.

Finally, some files used by the application can have multiple roles depending on the context. These files, here termed work files, are often used flexibly and can serve different purposes at different stages of the process. For example, they can act as inputs or outputs, depending on the specific needs of the application at a given time. In other words, a work file contains data computed by the application and stored in this file, with more or less pronounced alternating reading and writing operations. This means that the work file category refers to files that do not belong to one of the other categories of the plurality of categories.

In a first exemplary embodiment, in relation with figure 2, the file category is determined based on a distance computed between the obtained history and each of the reference histories. The file category is then defined based on a nearest neighbour strategy.

In this first example, the step 120 of determining the file category comprises a sub-step 121a of determining said distance between the obtained history and each reference history of the plurality of reference histories.

The distance is computed both for reading activities and for writing activities, even if one of them has no operations recorded.

This distance can be any kind of distance that indicates a level of similarity or difference between the obtained history and the reference histories. The distance can then be determined via any known technique, such as a Euclidian distance, an absolute difference, or else.

In an embodiment, the distance is obtained by applying a Dynamic Time Warping (DTW) technique to obtain a DTW matrix. This kind of distance is preferred over other distances as it accommodates variations and distortions between the compared histories, offering a nuanced representation of pattern similarities and differences. The distance is then equal to the value at the last element of the DTW matrix.

In a particular embodiment, the DTW matrix is independently computed for the reading and writing operations. Therefore, for each reference history, a DTW matrix is computed for the reading operations and another DTW matrix is computed for the writing operations. The DTW matrix, for the reading or the writing operations, is such that

$$DTW(i,j) = d(x_i, y_i) + \min \begin{cases} DTW(i-1, j) \\ DTW(i, j-1) \\ DTW(i-1, j-1) \end{cases}$$ , where $DTW(i,j)$ represents the accumulated DTW distance up to position (i,j) in the DTW matrix, with i is the index corresponding to the i-th element of the history in a time order, and with j is the index corresponding to the j-th element of a reference history in the same time order. $x_i$ and $y_j$ respectively represent the i-th and j-th elements of the time-ordered obtained history and the reference history. $d(x_i, y_j)$ is the distance measure between these elements.

When the DTW matrix is built for reading operations, $x_i$ indicates whether there is a reading operation at index $i$ of the obtained history, and $y_i$ indicates whether there is none or one or more reading operation at index $j$ of the reference history.

Respectively, when the DTW matrix is built for writing operations, $x_i$ indicates whether there is none or one or more writing operation at index $i$ of the obtained history, and $y_i$ indicates whether there is a writing operation at index $j$ of the reference history.

In this embodiment, the distance is then equal to a sum of the DTW distances taken from the reading operations DTW matrix and the writing operations DTW matrix. In other words, the distance is equal to the sum of the last element, i.e., the ($I,J$) element, of the reading operations DTW matrix and the last element, i.e., the ($I,J$) element, of the writing operations DTW matrix. Here, $I$ is the index of the last element of the obtained history and $J$ is the index of the last element of the considered reference history.

The step 120 of determining the file category then comprises a sub-step 122a of determining the file category of the file. In this case, the file category assigned to the file corresponds to the file category of the reference file that corresponds to the reference history for which the determined distance is the smallest. The file category assigned to the file is then the file category of the reference file to which the obtained history resembles the most, with respect to the computed distance (i.e., the smallest distance).

In other words, the file category of the file is the file category this file has the highest probability to belong to.

In some embodiments, instead of comparing every reference history with the obtained history of the file, the obtained history of the file is compared to a plurality of barycentre histories, at step 121a. Each barycentre history is the barycentre of reference histories that correspond to a same file category. This means that a file category is associated with a barycentre history that corresponds to the barycentre of the reference histories of the reference files corresponding to said file category. Each barycentre history then corresponds to one of the file categories. Respectively, each of the file categories corresponds to a barycentre history.

In this context, the distance (i.e., each DTW matrix, when applicable) is computed from the obtained history and one of the barycentre history. In other words, y here corresponds to the barycentre history of one of the file categories. This means that for each file category, the distance is computed between the obtained history and the barycentre history of said file category.

In this embodiment, at sub-step 122a, the file category of the file is then defined as the file category of the barycentre history among the barycentre histories for which the distance to the barycentre history is the smallest. In other words, the file category corresponds to the file category of the barycentre history given by $arg \min_k D(T, B_k)$, where $k$ is the k-th barycentre history among the plurality of barycentre histories $B$, which comprises $K$ reference histories (i.e., there is $K$ file categories), and $T$ is the obtained history of the file. Herein, $D$ is the computed distance, for example determined as the sum of the respective last elements of the reading operations DTW matrix and the writing operations DTW matrix.

As an example, the barycentre histories can be computed using a barycentre averaging method (F. Petitjean et al., A global averaging method for dynamic time warping, with applications to clustering, Pattern Recognition, vol. 44(3), 2011).

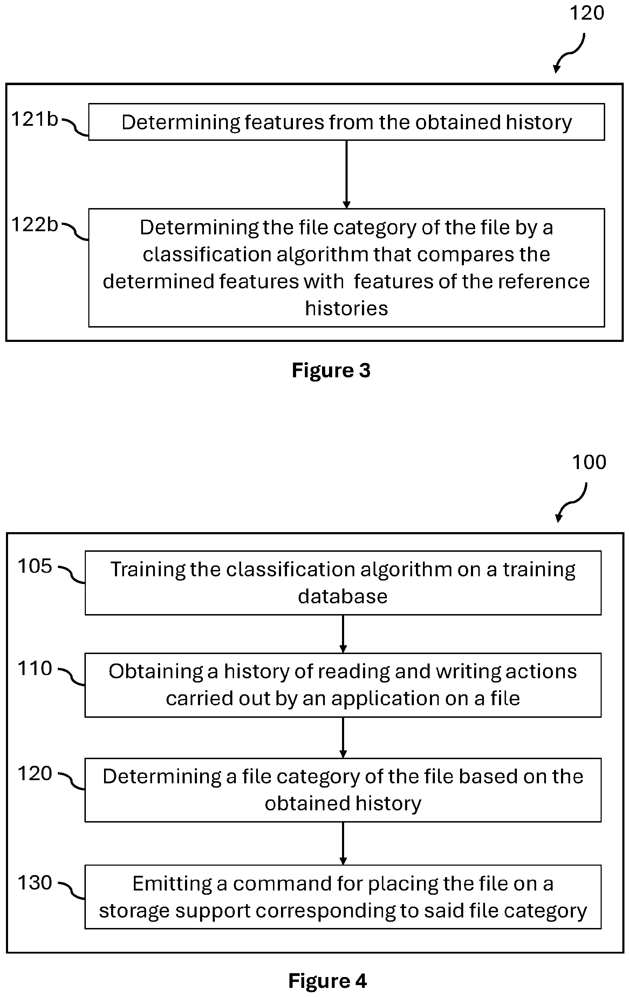

In a second exemplary embodiment, in relation with figure 3, the file category is determined using a machine learning classification algorithm. This classification algorithm is configured to determine the file category of the file from the algorithm with the obtained history of the file.

In particular, the classification algorithm is configured to determine the file category based on one or more features derived from the obtained history. This means that the classification algorithm is trained on a labelled database that comprises one or more features per reference history that are derived from said reference history. A label indicating the file category corresponding to the reference file associated with said reference history is associated to said one or more features. In other words, the machine learning classification algorithm is configured to provide the file category based on the determined features compared against the same one or more features determined for each reference history of the plurality of reference histories.

To this end, the step 120 of determining the file category comprises a sub-step 121b of determining the one or more features from the obtained history. The features can be any kind of features, for example any statistical metric, any mathematic transform, etc. The one or more features can be the same or can be different for the reading operations and for the writing operations comprised in the obtained history.

The features can be automatically or manually chosen depending on the application that is considered and/or by the operator based on his knowledge and experience in high-performance computing and/or this considered application.

In a variant of this embodiment, the one or more features comprises, for the reading operations of the obtained history, at least one of: an energy ratio by segments and/or a time reversal asymmetry statistic.

In a variant compatible with the previous variant, the one or more features comprises, for the writing operations of the obtained history, at least one of: a sum of values, Fourier Transform coefficients, a time reversal asymmetry statistic, a position of the last maximum value, an energy ratio by segments, changes between quantiles, continuous wavelet transform coefficients and/or an indicator of duplicate maximum values.

The step 120 of determining the file category then comprises a sub-step 122b of determining the file category of the file by the machine learning classification algorithm. The one or more features derived from the obtained history are fed to the machine learning classification algorithm, which in return produces the file category. In other terms, the machine learning classification algorithm compares the one or more features derived from the obtained history to the same one or more features derived from each reference history from the plurality of reference histories to determined said file category.

The machine learning classification algorithm can be any machine learning algorithm able to provide a classification of the file based on its history. For example, the machine learning classification algorithm can be a supervised machine learning algorithm such as a random forest algorithm, a support-vector machine algorithm, a gradient boosting, a neural network, a kernel-based algorithm, etc.

In some embodiments, with respect to figure 4, the machine learning classification algorithm is trained, through the implementation of a step 105 of the method 100, prior to step 110 of obtaining a history related to the file. It is however noted that the training of the machine learning classification algorithm can alternatively be carried out before the implementation of the method 100 itself. This training step can then indifferently be part of the method 100 or not.

As previously stated, the machine learning classification algorithm is trained over a database comprising the plurality of reference histories. In this database, each reference history is tagged with a label that indicates the file category of the file associated with each of the reference file corresponding to the reference histories of the plurality of reference histories. In other words, each reference history is associated with a label that indicates the file category of the reference file corresponding to said reference history.

The machine learning classification algorithm therefore learns to associate each reference history, or the one or more features of each of the reference histories, depending on the implemented embodiment, with its corresponding label (i.e., its corresponding file category).

The database can be built automatically or manually via any means, for example by the operator of the HPC. In particular, the operator can manually build the database by associating each reference history, or the one or more features extracted from said reference history (i.e., the values of the one or more features derived from said reference history), with a label (i.e., with the file category that corresponds to the reference file related to said reference history).

In some embodiments, the machine learning classification algorithm can be trained for the application using the file. This means that the machine learning classification algorithm can be trained on a database comprising reference histories (or features derived from said reference histories) of reference files used by the application and by no other application. In other words, the training of the machine learning classification algorithm can be application dependent. Advantageously, this means that the approach herein presented can be applied to an application for which it has not been applied before, while resulting in a significant increase of the hit rate of the application through the implementation of the method 100.

In other embodiments, the machine learning classification algorithm can be trained for several different applications and applied thereafter for these applications or another application without specific training for this another application (i.e., without reference history of a reference file used by this another application).

In one embodiment, the steps of the method 100 are repeated over time, during the execution of the application, to further refine the classification of the file that can evolve or that can be corrected, for example in the case the previous determined file category is erroneous or based on an incomplete history.

As such, in this embodiment, the steps of the method 100 are repeated after a predefined duration. The predefined duration is a duration defined prior to implementing the method and that can be defined by any technique. For example, it can be defined automatically, via any analysis algorithm and/or manually by the operator, for example based on his knowledge and experience in terms of high-performance computing and/or on the considered application.

The predefined duration can be proportional to the length of the history. For example, it can be comprised between 1 % and 50 % of the length of the obtained history, i.e., the number of previous accesses to the file by the application. It can also be comprised between 2 % and 25 % of the length of the obtained history, or even between 5 % and 15 % of said length. For example, it can be equal to 10 % of said length. As an example, when the length of the history is equal to the 100 previous accesses, the predefined duration is equal to 10 accesses. This means that each 10 accesses to the file, the steps of the method 100 are repeated.

This means that the history is updated over the time of execution of the application to only keep track of the accesses of the application to the file.

In particular, the step 110 of the history obtention and the step 120 of the file category determination are carried out again after the predefined duration. Via this new implementation of step 100, the obtained history corresponds to the previous access operations to the file by the application up to the end of the predefined period.

At the end of this step 120 carried out after the predefined duration, the step 130 of the command emission can also be carried out. For example, this step 130 can then be carried out when the file category of the file has changed when implementing the steps 110 and 120 after the predefined duration. In other words, the command emission is carried out after the carrying out of the history obtention and the file category determination after the predefined duration, when the file category determined after the predefined duration is different from the file category determined before the predefined duration. If the file category of the file is the same as before the predefined duration, then the step 130 of emitting the command can be not implemented. In such case, the method 100 also includes the comparison of the file category determined after the predefined duration with the file category determined before the predefined duration. The command is then emitted when the comparison shows that these compared file categories are different.

Alternatively, the step 130 of emitting the command is always implemented whether the file category has changed or not. In this case, when the file category of the file has changed, then the burst buffer decides to move the file to the storage support associated with the modified file category of the file. However, when the file category of the file has not changed, then the burst buffer decides not to move the file from the storage support it is already stored on.

In some embodiments, the obtained history and the reference histories are normalised. Which means that they are mathematically transformed so that their values are comprised between 0 and 1. The normalisation highlights the variations shape of the reading and writing operations in the histories, regardless of the intensity of the values, allowing to compare histories with different amplitudes but with similar trends.

In particular, the volume of reading operations and the volume of writing operations are independently normalised. This means that the volume of reading operations is normalised regardless of the volume of writing operations, and the volume of writing operations is normalised regardless of the volume of reading operations. This normalisation is applied for the reading and writing operations from the obtained history and from the reference histories.

The normalisation can be a min-max normalisation so that $V_{norm} = \dfrac{V - \min(V)}{\max(V) - \min(V)}$, where $V$ is the volume of reading operations or the volume of writing operations of a history, be it the obtained history or one of the reference histories, and $V_{norm}$ is the normalised volume of reading operations or the normalised volume of writing operations. The normalised corresponding history is then obtained by concatenating the normalised volume of reading operations and the normalised volume of writing operations corresponding to the history.

As an exemplary embodiment, the history is divided into a plurality of bins. In this case, each bin comprises the volume of data read by the reading operations, and the volume of data written by the writing operations.

A bin is a temporal window of a predefined length. The predefined length can be the same or different for each bin of the plurality of bins. The predefined length is defined prior to the implementation of the method 100.

The predefined length can be dependent on the length of the operation of the application or can be the same for several or each application. Alternatively, the predefined length is dependent on the length of the history. For example, depending on the length of the history, the history comprises at least 2 or 5 or 10 or 15 or 20 bins.

Preferably, the predefined length is defined so that it is short enough to have a good granularity of the behaviour of the application over its operating time while reducing the variability of the trends of the histories. The predefined length is also preferably long enough to still be able to differentiate two files that are of different categories from their respective history (because of the lack of statistical and data volume knowledge).

In this embodiment, alike the obtained history, each reference history is also divided into a plurality of bins. The bins of this plurality of bins have a same predefined length. Each of these bins can be of the same predefined length as the bins of the obtained history or can be of different length.

In case the distance is determined from the DTW technique, each DTW matrix (i.e., one DTW matrix for reading operations and one DTW matrix for writing operations, per reference history) is derived from the bins of the obtained history and the bins of the considered reference history.

In particular; referring to the aforementioned DTW matrix computation equation, indices i and j respectively refer to the i-th bin of the obtained history and the j-th bin of the considered reference history.

Therefore, in this embodiment, considering a reading operations DTW matrix, $x_i$ corresponds to the volume of data read through the reading operations at the i-th bin of the obtained history, while $y_i$ corresponds to the volume of data read through the reading operations at the j-th bin of the considered reference history. Moreover, considering a writing operations DTW matrix, $x_i$ corresponds to the volume of data read through the writing operations at the i-th bin of the obtained history, while $y_i$ corresponds to the volume of data read through the writing operations at the j-th bin of the considered reference history.

In case the distance is derived from the comparison with barycentre histories, each barycentre history is also divided into a plurality of bins. The bins of this plurality of bins have a same predefined length. Each of these bins can be of the same predefined length as the bins of the obtained history or can be of different length. Preferably, the reference histories from which each barycentre history is computed comprise the same number of bins, and each of these bins are of a same predefined length (such as the predefined length of the bins of the obtained history).In this case, each DTW matrix is bin-wise derived from the obtained history and one of the barycentre histories.

It is noted that division of the history, and the reference histories, into bins is also compatible with the second exemplary embodiment aforementioned, relying on the classification algorithm.

Implementation examples of the method (100) include :

- Anticipating use or non-use of certain files, so that these files are moves onto the right storage support, before they are needed or at the moment they are no more needed by the application;
- Moving a file to the right storage support, i.e., to the storage support corresponding to its category; also in cases the file is created or placed on a wrong storage support;
- Freeing storage space, especially for high tiered storage supports, so that these storage supports are not saturated by unused files or by files that should be placed on a better suited storage support, such as a lower tiered one.

As such, the method (100) can be indifferently implemented over the course of the application and/or when a storage support is saturated or is close to be saturated, for example a high tiered storage support, such as the RAM or an SSD or SSD-NVMe of the node.

By "close to be saturated" is meant that there is no more sufficient space of the storage support to properly manipulate the files already stored on this storage support.

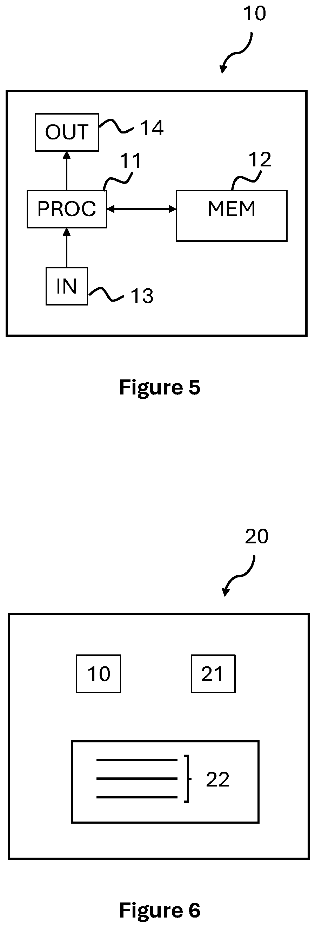

Another aspect of the invention, in relation with figure 5, relates to a module 10 for placing a file on a storage support among a plurality of storage supports in a high-performance computer. The module 10 is configured to carry out the steps of the method 100.

For example, the module 10 can comprise a processor 11 and a memory 12, together connected. The memory can comprise instructions that when implemented by the processor 11 lead the module 10 to carry out the steps of the method 100.

In order to obtain the history of the file, the module 10 can comprise an input 13 adapted to receive said history. The input 13 can be any kind of input able to receive the history. The input 13 is connected to the processor 11.

In order to emit the command at step 130 of the method 100, for example to the burst buffer, the module 10 can also comprise an output 14 adapted to emit said command. The output 14 can be any kind of output able to emit said command. The output 14 is connected to the processor 11.

Alternatively, the module 10 can be a software module, implemented by a computer.

Another aspect of the invention, in relation with figure 6, relates to a high-performance computer 20 that comprises the plurality of storage supports 22 and the aforementioned module 10 configured to implement the method 100. The high-performance computer can also comprise the burst buffer 21.

By means of illustration, an example of the implementation of the method 100 has been performed for several applications, including NEMO (standing for "Nucleus for European Modeling of the Ocean"), LQCD (standing for "Lattice Quantum Chromodynamics"), NAMD (standing for "Nanoscale Molecular Dynamics") and a custom benchmark application, noted BENCH, specifically tailored for manipulating clearly defined and easily predictable input and working files. The method 100 has been implemented based on the first exemplary embodiment, using the nearest-neighbour approach.

In this example, the plurality of storage supports comprises a 3 GB RAM (tier 1) and an 8 GB NVME (tier 2).

The following table sums up the hit rates on RAM and SSD storage supports of each of the applications for several known file placement strategies, including LRU, LFU, ARC (standing for Adaptive Replacement Cache), LIRS (standing for Low Inter-reference Recency Set), F-LRU and the method 100. The hit rates for the LRU, LFU, ARC, LIRS and F-LRU (standing for File-based LRU) strategies are taken from the literature.

| Application | Hit rate | Strategies | | | | | |
|---|---|---|---|---|---|---|---|
| | | LRU | LFU | ARC | LIRS | F-LRU | Method 100 |
| NEMO | RAM | 95% | 95% | 95% | 90% | 96% | 96% |
| | SSD | 5% | 3% | 4% | 3% | 4% | 4% |
| LQCD | RAM | 29 % | 39% | 34% | 9% | 30% | 88% |
| | SSD | 68% | 21 % | 45% | 20% | 68% | 12% |
| NAMD | RAM | 100% | 100% | 100% | 100% | 100% | 100% |
| | SSD | 0% | 0% | 0% | 0% | 0% | 0% |
| BENCH | RAM | 73% | 65% | 64% | 56% | 72% | 73% |
| | SSD | 26% | 34% | 35% | 42% | 27% | 27% |

From these results, it can be observed there is an improvement in the hit rate of these applications, which is particularly significant for the LQCD and BENCH applications.

**Claims**

1. Computer implemented method (100) for placing a file on a storage support (22) among a plurality of storage supports (22) in a high-performance computer (20), each storage support (22) of the plurality of storage supports (22) having different storing capacities, the file being used by an application running on the high-performance computer (20), the method (100) comprising:

   - Obtaining (110) a history related to a plurality of previous accesses to the file by the application, an access being a reading or a writing operation;
   - Determining (120) a file category of the file among a plurality of file categories, by comparing the obtained history with a plurality of reference histories, each reference history corresponding to a reference file from a plurality of reference files, each said reference file corresponding to a file category from the plurality of file categories, each file category of the plurality of file categories being associated with one of the storage supports (22) of the plurality of storage supports (22);
   - Emitting (130) a command for placing the file on the storage support (22) of the plurality of storage supports (22) to which the determined file category of said file is associated.

2. Method (100) according to claim 1, wherein the history comprises between 10 and 500 of the latest accesses to the file by the application.

3. Method (100) according to any of the preceding claims, wherein the plurality of file categories comprises one or more of an input file category, a checkpoint file category, a log file category, a work file category and/or an output file category, wherein:

   - The input file category refers to files for which a history of previous accesses only has a reading activity at the beginning of the execution of the application;

- The checkpoint file category refers to files for which a history of previous accesses has a regular writing activity;
- The log file category refers to files for which a history of previous accesses has an irregular writing activity;
- The output file category refers to files for which a history of previous accesses only has a writing activity at the end of the execution application;
- The work file category refers to files that do not belong to one of the other categories of the plurality of categories.

4. Method (100) according to any of the preceding claims, the file category of the file is determined by:

- Determining (121a) a distance between the obtained history and each reference history of the plurality of reference histories;
- Assigning (122a) to the file, the file category of the reference file that corresponds to the reference history for which the determined distance is the smallest.

5. Method (100) according to claim 4, wherein the distance is derived using a dynamic time warping technique applied to both previous read and write accesses in the obtained history.

6. Method (100) according to claim 4 or 5, wherein the distance is computed between the obtained history and a barycentre history from a plurality of barycentre histories, each barycentre history being a barycentre of the reference histories corresponding to reference files associated with a same file category from the plurality of file categories.

7. Method (100) according to any of claims 1 to 3, wherein the file category of the file is determined by:

- Determining (121b) one or more features from the obtained history;
- Determining (122b) the file category of the file by a machine learning classification algorithm configured to provide the file category based on the determined features compared against the same one or more features determined for each reference history of the plurality of reference histories.

8. Method (100) according to claim 7, wherein the one or more features comprise one or more of:

- An energy ratio by segments and/or a time reversal asymmetry statistic for the reading operations contained in the obtained history; and/or
- A sum of values, Fourier Transform coefficients, a time reversal asymmetry statistic, a position of the last maximum value, an energy ratio by segments, changes between quantiles, continuous wavelet transform coefficients and/or an indicator of duplicate maximum values, for the writing operations contained in the obtained history.

9. Method (100) according to any of claims 7 or 8, wherein the machine learning classification algorithm is trained on a database comprising the plurality of reference histories, each reference history being associated with a label that indicates the file category of the reference file corresponding to said reference history.

10. Method (100) according to any of the preceding claims, wherein the history obtention and the file category determination are carried out again after a predefined duration.

11. Method (100) according to claim 10, wherein the command emission is carried out after the carrying out of the history obtention and the file category determination after the predefined duration, when the file category determined after the predefined duration is different from the file category determined before the predefined duration.

12. Module (10) for placing a file on a storage support (22) among a plurality of storage supports (22) in a high-performance computer, said module (10) being configured to carry out the steps of the method (100) according to any of the preceding claims.

13. High-performance computer (20) comprising a plurality of storage supports (22) and a module (10) for placing a file on a storage support (22) among the plurality of storage supports (22) in the high-performance computer (20), according to claim 12.

14. Computer program product comprising instructions which, when the program is executed by a computer, causes the computer to carry out the method (100) according to any of claims 1 to 11.

15. Computer-readable medium comprising instructions which, when executed by a computer, cause the computer to carry out the method (100) according to any of claims 1 to 11.

100

110 — Obtaining a history of reading and writing actions carried out by an application on a file

120 — Determining a file category of the file based on the obtained history

130 — Emitting a command for placing the file on a storage support corresponding to said file category

**Figure 1**

120

121a — Determining a distance between the obtained history and reference histories

122a — Defining the file category of the file as the one corresponding to the reference history for which the determined distance is the smallest

**Figure 2**

120

| 121b | Determining features from the obtained history |
| 122b | Determining the file category of the file by a classification algorithm that compares the determined features with features of the reference histories |

**Figure 3**

100

| 105 | Training the classification algorithm on a training database |
| 110 | Obtaining a history of reading and writing actions carried out by an application on a file |
| 120 | Determining a file category of the file based on the obtained history |
| 130 | Emitting a command for placing the file on a storage support corresponding to said file category |

**Figure 4**

10

OUT — 14

11

PROC ↔ MEM

12

IN — 13

**Figure 5**

20

10    21

22

**Figure 6**

## EUROPEAN SEARCH REPORT

**Application Number**

EP 24 30 6656

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 983 873 B1 (BLACKARD ANDREW G [US]) 20 April 2021 (2021-04-20) * abstract * * column 1, last paragraph - column 2, paragraph 3 * * column 4, last paragraph - column 6, paragraph 2 * * column 9, paragraph 5 - column 14, paragraph 1; figures 1-6 * | 1-15 | INV. G06F16/11 |
| X | US 11 748 306 B1 (CHAUDHARY ABHISHEK SURESHCHANDRA [IN] ET AL) 5 September 2023 (2023-09-05) * abstract * * column 5, paragraph 1 - paragraph 3; figure 1 * * column 9, paragraph 2 - column 10, paragraph 4; figures 4-7 * * column 11, paragraph 3 - column 13, paragraph 3; figure 8 * | 1-15 | |

TECHNICAL FIELDS
SEARCHED (IPC)

G06F

The present search report has been drawn up for all claims

| Place of search | Date of completion of the search | Examiner |
|---|---|---|
| Berlin | 6 March 2025 | Barieux, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6656

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | | Publication date | Patent family member(s) | Publication date |
|---|---|---|---|---|
| US 10983873 | B1 | 20-04-2021 | NONE | |
| US 11748306 | B1 | 05-09-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JULIAN KUNKEL et al.** Predicting performance of non-contiguous I/O with machine learning. *Proceedings of the 30th International Conference in High Performance Computing*, 2015, vol. 30, 257-273
- **RYAN MCKENNA et al.** Machine learning predictions of runtime and io traffic on high-end clusters. *Proceedings of IEEE International Conference on Cluster Computing*, 2016, 255-258
- **J. HE ; X.-H. SUN**. KNOWAC: I/O Prefetch via Accumulated Knowledge. *Proceedings of the 2012 IEEE International Conference on Cluster Computing*, 2012
- **X. DING et al.** DiskSeen: Exploiting Disk Layout and Access History to Enhance I/O Prefetch. *Proceedings of the USENIX Annual Technical Conference*, 2007
- **F. PETITJEAN et al.** A global averaging method for dynamic time warping, with applications to clustering. *Pattern Recognition*, 2011, vol. 44 (3)